# EUROPÄISCHE PATENTSCHRIFT

(11) **EP 3 137 418 B1**
(45) Veröffentlichungstag und Bekanntmachung des Hinweises auf die Patenterteilung: **21.06.2023**
(21) Anmeldenummer: 14727160.5
(22) Anmeldetag: 20.05.2014
(51) Int. Cl.: C01B 25/234, C05B 1/04

(54) **VERFAHREN ZUR REINIGUNG VON ROH-PHOSPHORSÄURE (Z.B. MGA-SÄURE) DURCH ZUGABE VON ASCHEN AUS ABFALL-VERBRENNUNGSANLAGEN UMFASSEND DIE GEWINNUNG VON REINER PHOSPHORSÄURE, KALZIUMSULFAT, WASSERLÖSLICHEN KALZIUMHYDROGENPHOSPHATEN UND METALLSALZ-LÖSUNG**
METHOD FOR PURIFYING RAW PHOSPHORIC ACID (E.G. MGA ACID) BY ADDING ASHES ORIGINATING FROM WASTE INCINERATION PLANTS, COMPRISING THE PRODUCTION OF PURE PHOSPHORIC ACID, CALCIUM SULFATE, WATER-SOLUBLE CALCIUM HYDROGEN PHOSPHATES AND METAL SALT SOLUTION
PROCÉDÉ DE PURIFICATION D'ACIDE PHOSPHORIQUE BRUT (PAR EXEMPLE D'ACIDE DE QUALITÉ MGA) PAR AJOUT DE CENDRES PROVENANT D'INSTALLATIONS D'INCINÉRATION DE DÉCHETS, COMPRENANT L'OBTENTION D'ACIDE PHOSPHORIQUE PUR, DE SULFATE DE CALCIUM, D'HYDROGÉNOPHOSPHATES DE CALCIUM AQUEUX ET D'UNE SOLUTION DE SELS MÉTALLIQUES

(30) Priorität: 02.05.2014 DE 102014006278
(43) Veröffentlichungstag der Anmeldung: 08.03.2017
(73) Patentinhaber: Remondis Aqua GmbH & Co. KG, 44536 Lünen (DE)
(72) Erfinder: LEHMKUHL, Josef, 45721 Haltern am See (DE); LEBEK, Martin, 31303 Burgdorf (DE)
(74) Vertreter: Peters, Hajo
(86) Internationale Anmeldenummer: PCT/EP2014/001360
(87) Internationale Veröffentlichungsnummer: WO 2015/165481

(56) Entgegenhaltungen:
- EP-A2- 0 023 195
- DE-A1- 3 210 575
- JP-A- S5 375 196
- US-A- 3 006 754
- US-A- 4 248 617
- FRANZ ET AL: "Phosphate fertilizer from sewage sludge ash (SSA)", WASTE MANAGEMENT, ELSEVIER, NEW YORK, NY, US, Bd. 28, Nr. 10, 1. Januar 2008 (2008-01-01), Seiten 1809-1818, XP023437551, ISSN: 0956-053X, DOI: 10.1016/J.WASMAN.2007.08.011 [gefunden am 2008-01-01]

## Beschreibung

Die Erfindung betrifft ein Verfahren zur Reinigung von Roh-Phosphorsäure (z.B. MGA-Säure) wie in Anspruch 1 definiert.

Zur Herstellung von Düngemittel werden Rohphosphate (Rock) benötigt. Große Lagerstätten befinden sich vor allem in Nordafrika (Marokko, Algerien, Israel, Jordanien). In Europa gibt es keine nennenswerten Vorkommen an Rohphosphat. Um die endlichen Rohphosphate ersetzen zu können, ist allgemein bekannt, dass die Rückgewinnung von Phosphor bzw. Phosphaten aus Abfällen und Abwässern in den europäischen Industrieländern angestrebt wird. Dies ist auch deswegen angezeigt, weil die Rohphosphate zunehmend mit Schwermetallen wie Cadmium, Kupfer, Arsen und Uran (teilweise radioaktiv) verunreinigt sind und sich diese Verunreinigung in den Düngemitteln und im Grundwasser wiederfinden. Im Koalitionsvertrag von Dezember 2013 hat die Deutsche Bundesregierung festgeschrieben: "Der Schutz der Gewässer vor Nährstoffeinträgen sowie Schadstoffen soll verstärkt und rechtlich so gestaltet werden, dass Fehlentwicklungen korrigiert werden. Wir werden die Klärschlammausbringung zu Düngezwecken beenden und Phosphor und andere Nährstoffe zurückgewinnen."

Eine wesentliche Phosphat-Ressource in Europa ist das Abwasser aus kommunalen und industriellen Kläranlagen. Über 50.000 Mg (t) Phosphor gelangen pro Jahr in Deutschland ins Abwasser und werden zum allergrößten Teil mit Hilfe von Fällungsmitteln wie Eisen- oder Aluminiumsalze als Metallsalze ausgefällt und mit dem Klärschlamm abgeschieden. Die phosphathaltigen Klärschlämme werden heute zumeist verbrannt und die dabei entstehende Asche deponiert oder anderweitig "veruntreut" (z.B. Straßenbau, Bergeversatz), denn der darin enthaltene Phosphor wird - bis auf wenige Ausnahmen in Versuchsanlagen - nicht zurückgewonnen.

Ähnlich wie bei anderen industriellen Recycling-Prozessen, beispielsweise der Rückgewinnung von Eisen aus Schrott, der Rückgewinnung von Papier aus Altpapier, der Rückgewinnung von Kupfer und anderen Metallen aus Elektrogeräten, ist auch eine industrielle Rückgewinnung von Phosphor aus Abfällen möglich. Eine wesentliche Voraussetzung dazu ist, dass die phosphorhaltigen Rückstände eine ausreichend hohe Phosphorkonzentration und eine geringe Verunreinigung aufweisen und im Wesentlichen den z.Zt. verwendeten Rohphosphaten entsprechen.

Phosphate werden aus Rohphosphat (Rock, mit einem Phosphatanteil von ca. 30% P2O5 und einem Calciumanteil von ca. 50% CaO) durch **Aufschluss** mit Schwefelsäure gewonnen. Die Verunreinigungen der Rohphosphate finden sich zum großen Teil auch in der gewonnenen Roh-Phosphorsäure wieder, die auch als "Grüne Säure" oder "MGA" (Merchant Grade Acid) bezeichnet wird. Weil in Europa Phosphat-Düngemittel aus importiertem Rock **und** importierter MGA-Phosphorsäure hergestellt werden, gibt es in den Düngemitteln erhebliche Schwermetallbelastungen. Rock und MGA-Phosphorsäure enthalten beispielsweise:

| | | Rock | MGA-Säure |
|---|---|---|---|
| Arsen | As | 9 | 5 |
| Cadmium | Cd | 26 | 24 |
| Chrom | Cr | 58 | 120 |
| Kupfer | Cu | 37 | 46 |
| Nickel | Ni | 55 | 24 |
| Uran | U | 123 | 210 |

### (Angaben jeweils mg/kg Rock bzw. Säure)

Bei der Düngemittelherstellung werden Rock und MGA-Phosphorsäure miteinander gemischt (granuliert), wobei der wasserunlösliche Rock-Apatit (Trikalziumphosphat) in wasserlösliches Kalziumdihydrogenphosphat umgewandelt wird. Ein so gewonnenes Düngemittel wird auch als Triplesuperphosphat) bezeichnet:

Ca₃(PO₄)₂ + 4 H₃PO₄ = 3 Ca(H₂PO₄)₂

Bei diesem Prozess addieren sich die Schwermetallanteile aus Rock und MGA-Phosphorsäure, zudem werden die zumeist inerten Schwermetalle durch die Säure als wasserlösliche Salze mobilisiert. Theoretisch kann für diesen Prozess auch **gereinigte** Phosphorsäure verwendet werden, was die Herstellung von Düngemittel allerdings erheblich verteuert, denn die Reinigung der MGA-Phosphorsäure (bis hin zu Food- oder Feed-Qualität) ist sehr aufwändig.

Um Phosphorsäure aufzureinigen, gibt es verschiedene Lösungsansätze:
- Die europäische Patentanmeldung EP 0 023 195 A2 der Boliden AB (SE) betrifft ein Verfahren zum Entfernen von Schwermetallen, insbesondere Cadmium, aus Phosphorsäure. Dabei wird die rohe Phosphorsäure mit Schwefelsäure im Nassverfahren aufgeschlossen und durch Ausfällen der Schwermetalle in Sulfidform gereinigt,
- Die deutsche Patentanmeldung DE 32 10 575 A1 betrifft ein Verfahren zur Verminderung des Schwermetall-Gehaltes, insbesondere an Cadmiumverbindungen, im Roh-Phosphat, wobei dieses einer Säurebehandlung unterworfen wird. Dabei wird bei Anwesenheit von Ca-Ionen der pH-Wert zwischen 0,2-3 eingestellt und nach Abtrennung des behandelten Rohphosphates die Schwermetalle als Sulfide durch Einleiten von Schwefelwasserstoff in das die Schwermetalle enthaltene Filtrat gefällt werden.
- So verfolgt die japanische Patentanmeldung JP-S53-75196 der Central Glass Co. Ltd. (1978) das Ziel, Schwermetalle aus einer Phosphorsäurelösung dadurch zu entfernen, dass diesem eine Mischung aus einer Kalzium-Verbindung und einem Sulfid zugesetzt wird und das Präzipitat abgetrennt wird.

Es besteht demnach ein Bedarf nach neuen, einfacheren und ökonomischeren Verfahren zur Reinigung von MGA-Phosphorsäure, insbesondere hinsichtlich der Entfernung von toxischen und anderweitig schädlichen Schwermetallen. Ein solches Verfahren würde eine kostengünstige Möglichkeit zur Gewinnung/Herstellung von Phosphaten und deren Derivaten, z.B. Phosphatdünger, reine Phosphorsäure, ermöglichen.

Das Problem wird mit dem hier beschriebenen Verfahren sehr kostengünstig und effektiv gelöst, indem die unreine MGA-Phosphorsäure durch Zugabe von Asche aus Abfallverbrennungsanlagen gereinigt wird, wie in Anspruch 1 definiert.

Dabei wird die Roh-Phosphorsäure nicht nur gereinigt, sondern gleichzeitig auch ihre Phosphorkonzentration erhöht. Aschen aus Abfallverbrennungsanlagen enthalten - wenn z.B. Klärschlämme oder Tiermehle verbrannt werden - über 10 Gew. % Phosphor (P), der zu H₃PO₄ umgewandelt werden kann. Entsprechend den molaren Verhältnissen (Molgewicht Phosphor/P = 30,98; Molgewicht Phosphorsäure/H₃PO₄ = 98) entstehen aus 10g Phosphor 31,6g Phosphorsäure, d.h. aus 100g Asche mit 10% P kann 31,6g H₃PO₄ gewonnen werden.

Wird Asche optional in einer 30%igen MGA-Phosphorsäure im Verhältnis 1 Teil Asche und 3 Teile Säure gelöst, so erhöht sich die H₃PO₄-Konzentration im Eluat auf über 35% H₃PO₄. Der Reinigungseffekt der MGA-Phosphorsäure wird einerseits durch die Silikatanteile der Asche erreicht, andererseits durch Zugabe von Kalkmilch (Calciumhydroxid-Suspension) und Alkali- und/oder Erdalkalisulfiden (Na-Sulfid, Ba-Sulfid) verbessert, weil gelöste Schwer-metalle zusätzlich als Sulfide gefällt und in die Matrix der eluierten Asche koaguliert und eingebunden werden, so dass die oft kolloidalen Metallsulfide wesentlich besser filtrierbar sind Das auf diese Weise gewonnene Filtrat, bzw. das Eluat aus Phosphorsäure, das neben geringen Mengen Metallionen vor allem Kalzium in gelöster Form enthält, kann wahlweise in **zwei Schritten** weiterverarbeitet werden:

### 1. Herstellung eines Ca-Hydrogenphosphat-Granulates

Durch Zugabe von Tricalciumphosphathaltigen Feststoffen ("Rock", Aschen, z.B. aus Tiermehl), und/oder von Kalksteinmehl oder Kalziumoxid (gebrannter Kalk) wird optional Kalziumhydrogenphosphat-Granulat (Ca(H₂PO₄)₂ (MCP), CaHPO₄ (DCP) oder Mischungen daraus) gewonnen, das beispielsweise als Düngemittel (Triplesuperphosphat = TSP) oder Futterphosphat (MCP) vermarktet werden kann.

6H₃PO₄ + 3CaO = 3Ca(H₂PO₄)₂ + 3H₂O

Entsprechend der Stöchiometrie werden für 6 x 98 = 588g Phosphorsäure und 3 x 56g = 168g Calciumoxid (alternativ 3 x 100g = 300g Kalkstein / CaCO3) benötigt.

In einem Mischaggregat, vorzugsweise in einem Pflugscharmischer bzw. Wurfschaufelmischer, wird das Kalziumoxid als reaktives Pulver zu der vorgelegten Roh-Phosphorsäure (H₃PO₄-Konzentration 30 - 35%) zugegeben. Dieser Prozess ist stark exotherm und führt zu einem heißen Feuchtgranulat, das in einem Reife- und Auskühlprozess zu einem lufttrockenen Granulat führt, das vorzugsweise als Triplesuperphosphat (TSP) vermarktet werden kann. Im Gegensatz zu den üblichen Düngemitteln, die aus Rohphosphaten und MGA-Säure hergestellt werden, ist das Produkt erheblich geringer mit Schwermetallen belastet:

| Triplesuperphosphat | alt | neu |
|---|---|---|
| % P₂O₅ | 49,5 | 48,6 |
| % CaO | 23,1 | 23,8 |
| ppm Cu | 39 | 6 |
| ppm Cr | 120 | 35 |
| ppm Cd | 18 | <1 |
| ppm U | 184 | 38 |

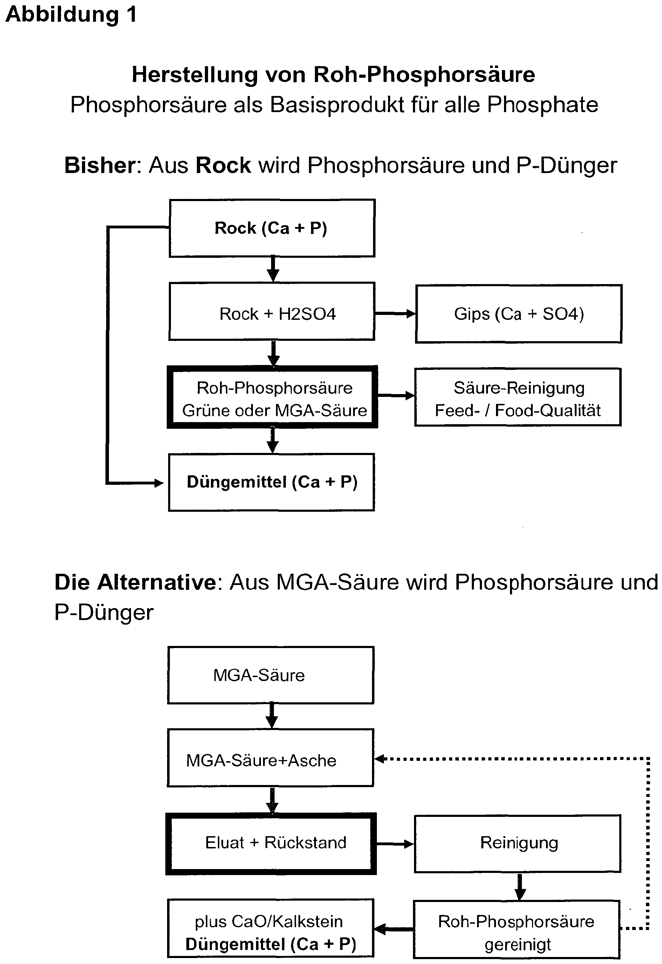

Diese Vorgehensweise hat ökologisch einen außerordentlichen Stellenwert. Bisher werden Rock (Kalziumphosphat) und Phosphorsäure nach Europa importiert und daraus Düngemittel hergestellt. Nach dem erfindungsgemäßen Verfahren können nun europäische Kalzium-Rohstoffe (Kalksteine, Tiermehlaschen), wie auch Phosphat-Rohstoffe (Klärschlammaschen, Tiermehlaschen) verwendet werden. Ein Vergleich des herkömmlichen Verfahrens basierend auf Rock und dem erfindungsgemäßen Verfahren basierend auf Aschen, ist in Abbildung 1 wiedergegeben.

### 2. Herstellung von reiner Phosphorsäure und saurer Metallsalz-Lösung.

Aus dem Phosphorsäure-Asche-Eluat wird - optional - zunächst durch Zugabe von Schwefelsäure Calciumsulfat (Gips) präzipitiert und durch Protolyse Phosphorsäure gewonnen.

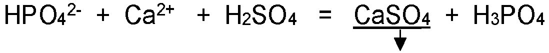

Das Calciumsulfat-Präzipitat (Gips) wird in bekannter Weise abfiltriert. Die so gewonnene Rohsäure enthält noch gelöste Metalle, vor allem Eisen und Aluminium, die mit zunehmender Standzeit und Aufkonzentration als Salze auskristallisieren. Aus diesem Grund muss die Rohsäure von störenden Metallionen befreit werden. Dazu eignen sich grundsätzlich alle Trennverfahren, die saure Metallsalzlösungen mit Membranen, durch Elektrodialyse, Osmose oder mit lonentauscher-Harzen in gereinigte (metallarme) Säure und konzentrierte Metallsalzlösungen "zerlegen" können. Die metallarme Rohsäure kann nun durch z.B. Vakuumverdampfung auf eine Konzentration von über 70% H₃PO₄ konzentriert werden, ohne dass es zu Auskristallisationen kommt.

Erfindungsgemäß können zur Phosphorsäure-Reinigung vorzugsweise lonentauscher-Harze verwendet werden und die mit Metallionen beladenen Harze wahlweise mit Salz-, Schwefel- oder Salpetersäure regeneriert werden. Obwohl die Salpetersäure mit einem pKS -Wert von -1,3 weniger stark ist, als die Salzsäure mit einem pKS-Wert von -6, Schwefelsäure von -3 (pKS = Säure-konstante), zeigt sich überraschender Weise ein ausreichender Regenerations-Effekt, d.h., die Metallionen, im Wesentlichen Eisen und Aluminium, werden als Nitrate rückgelöst und das lonentauscher-Harz wieder mit H-Ionen beladen. Die Eisen- und Aluminium-haltige Nitratlösung kann nun erfindungsgemäß in Kläranlagen, die mit einer geeigneten biologischen Denitrifikationsstufe ausgerüstet sind, als Fällungsmittel für die im Abwasser gelösten Phosphate verwendet werden. Das Anion Nitrat wird durch Denitrifikanten in Luft-Stickstoff umgewandelt und dient den anaeroben Bakterien als Sauerstoffquelle und Energielieferant.

Anders als bei der Verwendung von Eisen- bzw. Aluminium-Chloriden oder Sulfaten, die üblicherweise in Kläranlagen als Phosphat-Fällungsmittel eingesetzt werden, kommt es beim Einsatz von Metall-Nitraten zu keiner unerwünschten Aufsalzung des Wassers durch Säurereste (Anionen). Die folgenden chemischen Reaktionsgleichungen verdeutlichen den Effekt:
a) übliche Phosphatfällung in Kläranlagen:

   PO₄³⁻ + FeCl₃ = FePO₄ + 3Cl⁻

   2PO₄³⁻ + Al₂(SO₄)₃ = 2AlPO₄ + 3 SO₄ ²⁻
b) innovative Phosphatfällung:
   *Schritt 1: Regeneration der Ionentauscher mit HNO3*

      Fe³⁺ + Al³⁺ + 6HNO₃ = Fe(NO₃)₃ + Al(NO₃)₃ + 6H⁺
   *Schritt 2: Phosphatfällung*

      PO₄ ³⁻ + Fe(NO₃)₃ = FePO₄ + 3NO₃⁻
   *Schritt 3: Denitrifikation in der Biologie*

      2NO₃ + 6H⁺ + 6e⁻ = N₂ + 3H₂O

Die Verwendung von Eisen- oder Aluminium-Nitrat in der Abwasserreinigung ist bisher nicht üblich (außer speziellen Anwendungen zur Geruchsbekämpfung), weil die Nitrate erheblich teurer sind, als die entsprechenden Chloride oder Sulfate. Entsprechend der Erfindung kann die Nitratlösung "vor Ort" als Beiprodukt einer Phosphorsäurereinigung gewonnen und als verdünnte Lösungen zur Fällung von Phosphaten und als Sauerstofflieferant zur biologischen Abwasserreinigung eingesetzt werden. Ist die Kläranlage für die Denitrifikation nicht ausgerüstet, kann zur Harz-Regeneration Salz- oder Schwefelsäure verwendet werden.

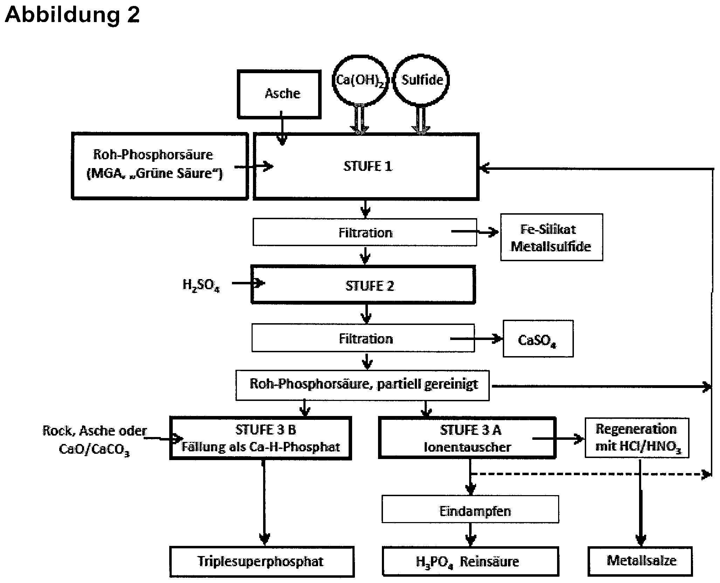

Den gesamten Prozess zur Reinigung von Rohphosphorsäure und zur Erzeugung von Kalziumsulfat, Kalziumhydrogenphosphat, reiner Phosphorsäure und sauren Metallsalz-Lösungen ist in Abbildung 2 gezeigt.

Hier fällt insbesondere auf, dass das erfindungsgemäße Verfahren quasi modular aufgebaut ist, und zunächst die erfindungsgemäße Reinigung der "grünen Säure" bzw. der MGA von Schwermetallen durch Sulfidfällung ermöglicht.

### Beschreibung der Abbildungen

**Abbildung 1** zeigt einen schematischen Vergleich des Standes der Technik mit dem erfindungsgemäßen Verfahren.

**Abbildung 2** zeigt einen schematischen Prozessablauf des erfindungsgemäßen Verfahrens.

Im beanspruchten **Aspekt A1** betrifft die vorliegende Erfindung somit ein Verfahren zur Reinigung von Roh-Phosphorsäure, dadurch gekennzeichnet, dass
a) Roh-Phosphorsäure mit Asche, Kalziumhydroxid und mindestens einem Sulfid reagiert wird,
b) der in der Roh-Phosphorsäure unlösliche Teil der Feststoffe abgeschieden wird, so dass ein Filtrat erhalten wird.

Dabei wird die Asche durch Verbrennung von phosphathaltigen Klärschlämmen, biologisch abbaubaren Abfällen, Bioabfällen und/oder Tierabfällen in einer AbfallVerbrennungsanlagen erhalten.

Wie bereits oben ausführlich beschrieben und in Abbildung 2 dargestellt, eignet sich das gemäß dem Aspekt A1 gewonnene Filtrat bzw. Eluat (eine im Wesentlichen schwermetall-arme Roh-Phosphorsäure) zur weiteren Verarbeitung, bzw. zur weiteren Gewinnung (Erzeugung) von darin enthaltenen Wertstoffen.

Das nach der Abscheidung von Eisensilikat und (Schwer)metallsulfiden erhaltene Filtrat bzw. das Eluat kann demnach nun weiterverwendet werden z.B. zur Gewinnung von wasserlöslichen Kalziumhydrogenphosphaten z.B Düngemittel = Triplesuperphosphat. Optional kann das Filtrat bzw. Eluat vorher durch Zugabe von Schwefelsäure zur Bildung von Kalziumsulfat-Präzipitat weiter gereinigt werden. Interessanterweise wurde festgestellt, dass zur Ausfällung von Kalziumhydrogen-phosphat neben Kalziumoxid und/oder Kalziumcarbonat auch Trikalziumphosphathaltige Feststoffe, wie z.B. Rock oder Aschen von tierischen Abfällen (Tiermehl) aus Abfallverbrennungsanlagen verwendet werden können.

In einem zweiten (nicht beanspruchten) **Aspekt A2** betrifft die vorliegende Beschreibung demnach ein Verfahren zur Reinigung von Roh-Phosphorsäure, weiterhin umfassend die Gewinnung (Erzeugung) von reiner Phosphorsäure, Metallsalzen, Kalziumhydrogenphosphaten und Kalziumsulfat (CaSO₄), das Verfahren mindestens umfassend die Gewinnung (Erzeugung) von Kalzium-hydrogenphosphaten, z.B. Triplesuperphosphat, dadurch gekennzeichnet, dass
a) Roh-Phosphorsäure mit Asche, Kalziumhydroxid und mindestens einem Sulfid reagiert wird,
b) der säureunlösliche Teil der Feststoffe abgeschieden wird,
c) optional durch Zugabe von Schwefelsäure zum Filtrat bzw. Eluat ein pH Wert <1 eingestellt wird, und Kalziumsulfat-Präzipitat gewonnen und abgeschieden wird,
d) optional das Filtrat bzw. Eluat zumindest teilweise, zurückgeführt wird zur Verwendung in Schritt a),
e) durch Zugabe von Tricalciumphosphathaltigen Feststoffen, und/oder durch Zugabe von Kalziumoxid und/oder Kalziumcarbonat zum Filtrat bzw. Eluat aus Schritt b) oder c), Kalziumhydrogenphosphat-Präzipitat gewonnen und abgeschieden wird,
wobei vorzugsweise Schritte a), b) und e) durchgeführt werden.

In einer weiteren alternativen Ausführungsform des Aspektes A2 werden vorzugsweise Schritte a), b), c) und e) durchgeführt.

In einer weiteren alternativen Ausführungsform des Aspektes A2 werden vorzugsweise Schritte a), b), c), d) und e) durchgeführt.

In einer weiteren Ausführungsform des Aspektes A2 handelt es sich bei dem Tricalciumphosphathaltigen Feststoff um Asche.

In einer bevorzugten Ausführungsform des Aspektes A2 handelt es sich bei dem Tricalciumphosphathaltigen Feststoff um phosphathaltige Asche.

In einer weiteren bevorzugten Ausführungsform des Aspektes A2 handelt es sich bei dem Tricalciumphosphathaltigen Feststoff um Asche enthaltend Calcium-, Eisen- und Aluminium-Verbindungen in Form ihrer Phosphate und Silikate.

In einer besonders bevorzugten Ausführungsform des Aspektes A2 handelt es sich bei dem Tricalciumphosphathaltigen Feststoff um Asche aus der Verbrennung von, biologisch abbaubaren Abfällen, Bioabfällen, Klärschlämmen und/oder Tierabfällen in einer Abfall-Verbrennungsanlage.

Alternativ kann das nach der Abscheidung von Eisensilikat und (Schwer)metallsulfiden erhaltene Filtrat bzw. das Eluat nun zur Gewinnung von reiner Phosphorsäure weiterverwendet werden (optional kann das Filtrat bzw. das Eluat vorher durch Zugabe von Schwefelsäure zur Bildung von Kalziumsulfat-Präzipitat weiter gereinigt werden).

In einem dritten (nicht beanspruchten) **Aspekt A3** betrifft die vorliegende Beschreibung demnach ein Verfahren zur Reinigung von Roh-Phosphorsäure, weiterhin umfassend die Gewinnung (Erzeugung) von reiner Phosphorsäure, Metallsalz-Lösung, Kalziumhydrogen-phosphat und Kalziumsulfat (CaSO₄), das Verfahren mindestens umfassend die Gewinnung (Erzeugung) von reiner Phosphorsäure, dadurch gekennzeichnet, dass
a) Roh-Phosphorsäure mit Asche, Kalziumhydroxid und mindestens einem Sulfid reagiert wird,
b) der säureunlösliche Teil der Feststoffe abgeschieden wird,
c) optional durch Zugabe von Schwefelsäure zum Filtrat oder Eluat ein pH Wert <1 eingestellt wird, und Kalziumsulfat-Präzipitat gewonnen und abgeschieden wird,
d) optional das Filtrat oder das Eluat zumindest teilweise, zurückgeführt wird zur Verwendung in Schritt a),
e) die im Filtrat oder Eluat aus Schritt b) oder c) gelösten Metall-Ionen durch vorzugsweise H-Ionentauscher-Harze oder durch Diffusionsdialyse entfernt werden und das Eluat konzentriert wird, bevorzugt durch Vakuumverdampfung, zur Gewinnung von reiner Phosphorsäure,
f) optional nach Schritt e) das lonentauscher-Harz regeneriert wird, und Metallsalz-Lösung gewonnen werden,
wobei vorzugsweise Schritte a), b) und e) durchgeführt werden.

In einer weiteren alternativen Ausführungsform des Aspektes A3 werden vorzugsweise Schritte a), b), c) und e) durchgeführt.

In einer weiteren alternativen Ausführungsform des Aspektes A3 werden vorzugsweise Schritte a), b), e) und f) durchgeführt.

In einer weiteren alternativen Ausführungsform des Aspektes A3 werden vorzugsweise Schritte a), b), c), e) und f) durchgeführt.

In einer weiteren alternativen Ausführungsform des Aspektes A3 werden vorzugsweise Schritte a), b), c), d), e) und f) durchgeführt.

Selbstverständlich ist es auch möglich das Verfahren so durchzuführen, dass parallel Kalziumsulfat (CaSO₄), Kalziumhydrogenphosphat und/oder reine Phosphorsäure und Metallsalz-Lösung hergestellt werden können.

In einem vierten (nicht beanspruchten) **Aspekt A4** betrifft die vorliegende Beschreibung demnach ein Verfahren zur Reinigung von Roh-Phosphorsäure, weiterhin umfassend die Gewinnung (Erzeugung) von reiner Phosphorsäure, Metallsalz-Lösung, Kalziumhydrogen-phosphat und Kalziumsulfat (CaSO₄), dadurch gekennzeichnet, dass
a) Roh-Phosphorsäure mit Asche, Kalziumhydroxid und mindestens einem Sulfid reagiert wird,
b) der säureunlösliche Teil der Feststoffe abgeschieden wird,
c) durch Zugabe von Schwefelsäure zum Filtrat oder Eluat ein pH Wert <1 eingestellt wird, und Kalziumsulfat-Präzipitat gewonnen und abgeschieden wird,
d) optional das Filtrat oder das Eluat zumindest teilweise, zurückgeführt wird zur Verwendung in Schritt a),
e) die im Filtrat oder Eluat aus Schritt b) oder c) gelösten Metall-Ionen durch vorzugsweise H-Ionentauscher-Harze oder durch Diffusionsdialyse entfernt werden, und das Eluat konzentriert wird, bevorzugt durch Vakuumverdampfung, zur Gewinnung von reiner Phosphorsäure,
f) nach Schritt e) das lonentauscher-Harz regeneriert wird, und Metallsalz-Lösung gewonnen wird, und/oder
g) durch Zugabe von Tricalciumphosphathaltigen Feststoffen und/oder von Kalziumoxid und/oder Kalziumcarbonat zum Filtrat bzw. Eluat aus Schritt b) oder c), Kalziumhydrogenphosphat-Präzipitat (z.B. Triplesuperphosphat) gewonnen und abgeschieden wird,
wobei vorzugsweise Schritte a), b), c), e), f) und/oder g) durchgeführt werden.

In einer weiteren alternativen Ausführungsform des Aspektes A4 werden vorzugsweise Schritte a), b), c), d), e), f) und/oder g) durchgeführt.

In einer weiteren alternativen Ausführungsform des Aspektes A4 werden vorzugsweise Schritte a), b), c), d), e), f) oder g) durchgeführt.

In einer weiteren alternativen Ausführungsform des Aspektes A4 werden vorzugsweise Schritte a), b), c), d), e), f) und g) durchgeführt.

Wird in einer Ausführungsform der **Aspekte A2 bis A4, sowie den dazugehörigen obenstehenden Ausführungsformen** der Schritt d) durchgeführt, so werden bevorzugt mindestens 10% des Filtrats/Eluats zur Verwendung in Schritt a) zurückgeführt, besonders bevorzugt mindestens 20%,noch mehr bevorzugt 20% bis 80%, und am meisten bevorzugt 40% bis 60%, bezogen auf die gesamte erhaltene Filtratmenge.

In einer Ausführungsform der **Aspekte A1 bis A4, sowie den dazugehörigen obenstehenden Ausführungsformen** ist die Roh-Phosphorsäure mindestens mit Metallen verunreinigt.

In einer bevorzugten Ausführungsform der **Aspekte A1 bis A4, sowie den dazugehörigen obenstehenden Ausführungsformen** ist die Roh-Phosphorsäure mindestens mit Schwermetallen verunreinigt.

In einer weiteren bevorzugten Ausführungsform der **Aspekte A1 bis A4, sowie den dazugehörigen obenstehenden Ausführungsformen** ist die Roh-Phosphorsäure mindestens mit einem Schwermetall ausgewählt aus der Gruppe bestehend aus Arsen, Cadmium, Chrom, Kupfer, Nickel, oder Uran verunreinigt.

In einer besonders bevorzugten Ausführungsform der **Aspekte A1 bis A4, sowie den dazugehörigen obenstehenden Ausführungsformen** handelt es sich bei der Roh-Phosphorsäure um "Grüne Säure" oder "MGA" (Merchand Grad Acid).

In einer weiteren Ausführungsform der **Aspekte A1 bis A4, sowie den dazugehörigen obenstehenden Ausführungsformen** wird die Roh-Phosphorsäure, wie oben definiert, mit Wasser auf eine Konzentration von 10% bis 50 Gew.% H₃PO₄, vorzugsweise 10% bis 30 Gew.% H₃PO₄ verdünnt.

In einer besonders bevorzugten Ausführungsform der **Aspekte A1 bis A4, sowie den dazugehörigen obenstehenden Ausführungsformen** wird die Asche in einem Reaktor mit Roh-Phosphorsäure versetzt, wobei der Anteil an Asche zwischen 10% bis 75 Gew. % bezogen auf die verdünnte Roh-Phosphorsäure beträgt.

In einer besonders bevorzugten Ausführungsform der **Aspekte A1 bis A4, sowie den dazugehörigen obenstehenden Ausführungsformen** wird die Asche in einem Reaktor mit Roh-Phosphorsäure versetzt, wobei der Anteil an Asche zwischen 10% bis 55 Gew % bezogen auf die verdünnte Roh-Phosphorsäure beträgt.

In einer weiteren Ausführungsform der **Aspekte A1 bis A4, sowie den dazugehörigen obenstehenden Ausführungsformen** wird die Asche in einem Reaktor mit Roh-Phosphorsäure versetzt, wobei der Anteil an Asche 5 % bis 50 Gew.%, vorzugsweise 20% bis 40 Gew.%, besonders bevorzugt vorzugsweise 20% bis 30 Gew.%, und am meisten bevorzugt 25 Gew. % bezogen auf die verdünnte Roh-Phosphorsäure beträgt.

In einer weiteren Ausführungsform der **Aspekte A1 bis A4, sowie den dazugehörigen obenstehenden Ausführungsformen** beträgt die Reaktionszeit der Reaktion von Roh-Phosphorsäure und Asche 2 bis 300 Minuten, vorzugsweise 10 bis 60 Minuten.

In einer weiteren Ausführungsform der **Aspekte A1 bis A4, sowie den dazugehörigen obenstehenden Ausführungsformen** beträgt die Reaktionstemperatur der Reaktion von Roh-Phosphorsäure und Asche 20°C bis 90°C, vorzugsweise 40° bis 60°C.

In einer weiteren Ausführungsform der **Aspekte A2 bis A4, sowie den dazugehörigen obenstehenden Ausführungsformen** handelt es sich bei der Asche um phosphathaltige Asche.

In bevorzugten Ausführungsformen der **Aspekte A2 bis A4, sowie den dazugehörigen obenstehenden Ausführungsformen,** wird die phosphathaltige Asche durch Verbrennung von Klärschlämmen, biologisch abbaubaren Abfällen, Bioabfällen und/oder Tierabfällen in einer Abfall-Verbrennungsanlagen erhalten.

In einer besonders bevorzugten Ausführungsform der **Aspekte A1 bis A4, sowie den dazugehörigen obenstehenden Ausführungsformen** handelt es sich bei der Asche um Asche enthaltend Calcium-, Eisen- und Aluminium-Verbindungen in Form ihrer Phosphate und Silikate.

In einer weiteren Ausführungsform der **Aspekte A1 bis A4, sowie den dazugehörigen obenstehenden Ausführungsformen** wird der Asche-Roh-Phosphorsäure -Suspension nach 1 bis 300 Minuten, vorzugsweise nach 10 bis 30 Minuten Kalziumhydroxid und mindestens ein Sulfid zugegeben.

In einer weiteren Ausführungsform der **Aspekte A1 bis A4, sowie den dazugehörigen obenstehenden Ausführungsformen** wird der Asche-Roh-Phosphorsäure -Suspension mindestens ein Sulfid in einer Konzentration von 0,1g bis 10g Sulfid-Schwefel pro 100g Asche zugegeben.

In einer weiteren Ausführungsform der **Aspekte A1 bis A4, sowie den dazugehörigen obenstehenden Ausführungsformen** handelt es sich bei dem mindestens einen Sulfid um ein Metallsulfid.

In einer weiteren Ausführungsform der **Aspekte A1 bis A4, sowie den dazugehörigen obenstehenden Ausführungsformen** handelt es sich bei dem mindestens einen Sulfid um ein Sulfid bzw. Polysulfide von Alkalien oder Erdalkalien, oder Mischungen daraus.

In einer bevorzugten Ausführungsform der **Aspekte A1 bis A4, sowie den dazugehörigen obenstehenden Ausführungsformen** handelt es sich bei dem mindestens einen Sulfid um mindestens ein Alkalimetallsulfid, ausgewählt aus der Gruppe bestehend aus Lithiumsulfid, Natriumsulfid und Kaliumsulfid oder Mischungen daraus.

In einer bevorzugten Ausführungsform der **Aspekte A1 bis A4, sowie den dazugehörigen obenstehenden Ausführungsformen** handelt es sich bei dem mindestens einen Sulfid um mindestens ein Erdalkalimetallsulfid ausgewählt aus der Gruppe bestehend aus, Magnesiumsulfid, Calciumsulfid, und Bariumsulfid.

In einer besonders bevorzugten Ausführungsform der **Aspekte A1 bis A4, sowie den dazugehörigen obenstehenden Ausführungsformen** handelt es sich bei dem mindestens einen Sulfid um Natriumsulfid.

In einer besonders bevorzugten Ausführungsform der **Aspekte A1 bis A4, sowie den dazugehörigen obenstehenden Ausführungsformen** handelt es sich bei dem mindestens einen Sulfid um Bariumsulfid.

In einer besonders bevorzugten Ausführungsform der **Aspekte A1 bis A4, sowie den dazugehörigen obenstehenden Ausführungsformen** handelt es sich bei dem mindestens einen Sulfid um ein Gemisch aus Natriumsulfid und Bariumsulfid.

In einer weiteren Ausführungsform der **Aspekte A1 bis A4, sowie den dazugehörigen obenstehenden Ausführungsformen** wird das Kalziumhydroxid in Form von Kalkmilch (Calciumhydroxid- Aufschlämmung in Wasser) zugegeben.

In einer weiteren Ausführungsform der **Aspekte A1 bis A4, sowie den dazugehörigen obenstehenden Ausführungsformen** wird die Kalkmilch bis zu einem pH-Wert von 1,5 bis 3,0, vorzugsweise von 1,5 bis 2,0 zugegeben.

In einer weiteren Ausführungsform der **Aspekte A1 bis A4, sowie den dazugehörigen obenstehenden Ausführungsformen** werden aus der Asche- Roh-Phosphorsäure -Suspension zunächst die unlöslichen Feststoffe durch Filtrations-Technologien (z.B. Vakuumbandfilter, Filterpressen, Zentrifugen) abgeschieden.

In bevorzugten Ausführungsformen der **Aspekte A1 bis A4, sowie den dazugehörigen obenstehenden Ausführungsformen**, werden aus der Asche-Roh-Phosphorsäure-Suspension zunächst die unlöslichen Feststoffe mit Entwässerungsaggregaten (z.B. Vakuumbandfilter, Kammerfilterpresse, Membran-Filterpresse, Siebbandpresse, Zentrifuge).

In einer optionalen Ausführungsform der **Aspekte A1 bis A4, sowie den dazugehörigen obenstehenden Ausführungsformen** werden wahlweise nach Abtrennung der säureunlöslichen Feststoffe 20% bis 80% des Filtrats bzw. Eluates aus Schritt b), oder Schritt c) hinsichtlich der Aspekte A2 bis A4, vorzugsweise 40% bis 60%, zur Anreicherung von Calcium zum Aufschluss der Asche zurückgeführt.

In einer weiteren Ausführungsform der **Aspekte A2 und A4, sowie den dazugehörigen obenstehenden Ausführungsformen** wird durch Zugabe von Tricalciumphosphathaltigen Feststoffen, und/oder oder durch Zugabe von Kalziumoxid und/oder Kalziumcarbonat zum Filtrat bzw. Eluat aus Schritt b) oder c), Kalziumhydrogenphosphat-Präzipitat gewonnen und abgeschieden.

In einer weiteren Ausführungsform der **Aspekte A2 und A4, sowie den dazugehörigen obenstehenden Ausführungsformen** wird das Kalziumhydrogenphosphat-Präzipitat in Form eines Granulats gewonnen und abgeschieden.

In einer weiteren Ausführungsform der **Aspekte A2 und A4, sowie den dazugehörigen obenstehenden Ausführungsformen** handelt es sich bei dem Kalziumhydrogenphosphat-Präzipitat um Ca(H₂PO₄)₂ (MCP).

In einer weiteren Ausführungsform der **Aspekte A2 und A4, sowie den dazugehörigen obenstehenden Ausführungsformen** handelt es sich bei dem Kalziumhydrogenphosphat-Präzipitat um CaHPO₄ (DCP).

In einer weiteren Ausführungsform der **Aspekte A2 und A4, sowie den dazugehörigen obenstehenden Ausführungsformen** handelt es sich bei dem Kalziumhydrogenphosphat-Präzipitat um eine Mischung aus Ca(H₂PO₄)₂ (MCP) und CaHPO₄ (DCP).

In einer weiteren Ausführungsform der **Aspekte A2 und A4, sowie den dazugehörigen obenstehenden Ausführungsformen** handelt es sich bei dem Tricalciumphosphathaltigen Feststoff um Rohphosphat, sog. "Rock", bevorzugt in zerkleinerter Form, bevorzugt als Pulver, Schüttgut, granuläres Material, Grieß etc.

In einer weiteren Ausführungsform der **Aspekte A2 und A4, sowie den dazugehörigen obenstehenden Ausführungsformen** handelt es sich bei dem Tricalciumphosphathaltigen Feststoff um Asche.

In einer bevorzugten Ausführungsform der **Aspekte A2 und A4, sowie den dazugehörigen obenstehenden Ausführungsformen** handelt es sich bei dem Tricalciumphosphathaltigen Feststoff um phosphathaltige Asche.

In einer weiteren bevorzugten Ausführungsform der **Aspekte A2 und A4, sowie den dazugehörigen obenstehenden Ausführungsformen** handelt es sich bei dem Tricalciumphosphathaltigen Feststoff um Asche aus der Verbrennung von, biologisch abbaubaren Abfällen, Klärschlämmen, Bioabfällen und/oder Tierabfällen in einer Abfall-Verbrennungsanlage, bevorzugt um Asche aus der Verbrennung von Tierabfällen .

In einer besonders bevorzugten Ausführungsform der **Aspekte A2 und A4, sowie den dazugehörigen obenstehenden Ausführungsformen** handelt es sich bei dem Tricalciumphosphathaltigen Feststoff um Asche enthaltend Calcium-, Eisen- und Aluminium-Verbindungen in Form ihrer Phosphate und Silikate.

In einer weiteren Ausführungsform der **Aspekte A2 und A4, sowie den dazugehörigen obenstehenden Ausführungsformen** werden nach Abtrennung der säureunlöslichen Feststoffe, 20% bis 80% des Filtrats/Eluates aus Schritt b) oder c), vorzugsweise 40% bis 60% mit Tricalciumphosphathaltigen Feststoffen und/oder Kalkstein und/oder mit gebranntem Kalk (Calciumoxid) zur Herstellung von Kalziumhydrogenphosphat-Präzipitat, z.B. Triplesuperphosphat versetzt.

In einer weiteren Ausführungsform der **Aspekte A2 und A4, sowie den dazugehörigen obenstehenden Ausführungsformen,** wird der Tricalciumphosphathaltige Feststoff, bevorzugt Tiermehlasche, in einem Gewichtsverhältnis von 0,5 bis 2, bevorzugt 0,8 bis 1,4, besonders bevorzugt von 1 bezüglich dem Anteil an H₃PO₄ in der Roh-Phosphorsäure, wie oben definiert, zugesetzt.

In einer weiteren Ausführungsform der **Aspekte A2 und A4, sowie den dazugehörigen obenstehenden Ausführungsformen,** wird der Kalkstein bzw. der gebrannte Kalk in einem Mol-Verhältnis von 0,3 bis 1,8, vorzugsweise 0,7 bis 1,5, besonders bevorzugt 0,8 bis 1,2 CaO zu 2,0 P (Phosphor) der Roh-Phosphorsäure, wie oben definiert, zugesetzt.

In einer bevorzugten Ausführungsform der **Aspekte A2 und A4, sowie den dazugehörigen obenstehenden Ausführungsformen,** werden als Tricalciumphosphathaltige Feststoffe Tiermehlasche in einem Gewichtsverhältnis von 0,5 bis 2, bevorzugt 0,8 bis 1,4, besonders bevorzugt von 1 bezüglich dem Anteil an H₃PO₄ in der Roh-Phosphorsäure, wie oben definiert, zugesetzt, und Kalkstein bzw. der gebrannte Kalk in einem Mol-Verhältnis von 0,3 bis 1,8, vorzugsweise 0,7 bis 1,5, besonders bevorzugt 0,8 bis 1,2 CaO zu 2,0 P (Phosphor) der Roh-Phosphorsäure, wie oben definiert, zugesetzt.

In einer besonders bevorzugten Ausführungsform der **Aspekte A2 und A4, sowie den dazugehörigen obenstehenden Ausführungsformen**, wird Tiermehlasche in einem Gewichtsverhältnis von 1 bezüglich dem Anteil an H₃PO₄ in der Roh-Phosphorsäure, wie oben definiert, zugesetzt und Kalkstein bzw. der gebrannte Kalk in einem Mol-Verhältnis 0,8 bis 1,2 CaO zu 2,0 P (Phosphor) der Roh-Phosphorsäure, wie oben definiert, zugesetzt.

In einer weiteren Ausführungsform der **Aspekte A2 und A4, sowie den dazugehörigen obenstehenden Ausführungsformen,** wird der Tricalciumphosphathaltigen Feststoffen, oder der Kalkstein bzw. der gebrannte Kalk in einem Pflugscharmischer bzw. Wurfschaufelmischer zugemischt.

In einer weiteren Ausführungsform der **Aspekte A2 bis A4, sowie den dazugehörigen obenstehenden Ausführungsformen** wird durch Zugabe von Schwefelsäure Calciumsulfat-Präzipitat (Gips) gewonnen und abgeschieden.

In einer weiteren Ausführungsform der **Aspekte A2 bis A4, sowie den dazugehörigen obenstehenden Ausführungsformen** wird die Schwefelsäure in einem Mol-Verhältnis zugegeben wird, dass der gelösten Calcium-Konzentration von 0,5 Ca zu 1,5 SO4 (Sulfat), vorzugsweise 1,0 Ca zu 1,0 SO4 (Sulfat) entspricht.

In einer weiteren Ausführungsform der **Aspekte A2 bis A4, sowie den dazugehörigen obenstehenden Ausführungsformen** wird die Fällung des Calciumsulfat-Präzipitat (Gips) in einem Reaktor, bevorzugt in einem Rührreaktor durchgeführt.

In einer weiteren Ausführungsform der **Aspekte A2 bis A4, sowie den dazugehörigen obenstehenden Ausführungsformen** beträgt die Verweilzeit im Rührreaktor 5 bis 60 Minuten, vorzugsweise 10 bis 30 Minuten.

In einer weiteren Ausführungsform der **Aspekte A2 bis A4, sowie den dazugehörigen obenstehenden Ausführungsformen** beträgt die Reaktionstemperatur im Rührreaktor 20° bis 90°C beträgt, vorzugsweise 60° bis 90°C.

In einer weiteren Ausführungsform der **Aspekte A2 bis A4, sowie den dazugehörigen obenstehenden Ausführungsformen** wird das Calciumsulfat-Präzipitat (Gips) durch Filtrations-Technologien (z.B. Vakuumbandfilter, Filterpressen, Zentrifugen) abgeschieden.

In einer weiteren Ausführungsform der **Aspekte A2 bis A4, sowie den dazugehörigen obenstehenden Ausführungsformen,** wird das Calciumsulfat-Präzipitat (Gips) durch mechanische Filtrations- und/oder Entwässerungsverfahren abgeschieden.

In bevorzugten Ausführungsformen der **Aspekte A2 bis A4, sowie den dazugehörigen obenstehenden Ausführungsformen,** wird das Calciumsulfat-Präzipitat (Gips) mit Entwässerungsaggregaten abgeschieden, z.B. mit Vakuumbandfilter, Kammerfilterpresse, Membran-Filterpresse, Siebbandpresse oder Zentrifuge.

In bevorzugten Ausführungsformen der **Aspekte A2 bis A4, sowie den dazugehörigen obenstehenden Ausführungsformen,** wird das Calciumsulfat-Präzipitat (Gips) mit einem Vakuumbandfilter abgeschieden.

In einer weiteren Ausführungsform der **Aspekte A3 und A4, sowie den dazugehörigen obenstehenden Ausführungsformen** wird das Filtrat/Eluat aus Schritt b) oder c) über H-Ionentauscher oder durch Dialyse oder Osmose von Metallionen, bevorzugt von Aluminium-, Eisen- und Magnesiumionen abgereichert.

In einer bevorzugten Ausführungsform der **Aspekte A3 und A4, sowie den dazugehörigen obenstehenden Ausführungsformen** wird das Filtrat oder Eluat aus Schritt b) über H-Ionentauscher von Metallionen, bevorzugt von Aluminium-, Eisen- und Magnesiumionen abgereichert.

In einer besonders bevorzugten Ausführungsform der **Aspekte A3 und A4, sowie den dazugehörigen obenstehenden Ausführungsformen** wird das Filtrat oder Eluat aus Schritt c) über H-Ionentauscher von Metallionen, bevorzugt von Aluminium- , Eisen- und Magnesiumionen abgereichert.

In einer bevorzugten Ausführungsform der **Aspektes A3 und A4, sowie den dazugehörigen obenstehenden Ausführungsformen** wird das aus dem Ionentauscher erhaltene Eluat (Dünnsäure) durch Eindampfung auf einen Säuregehalt von 40% bis 80 Gew.% H₃PO₄, vorzugsweise 50 Gew.% bis 70 Gew.% H₃PO₄ (RePacid) konzentriert.

In einer bevorzugten Ausführungsform der **Aspekte A3 und A4, sowie den dazugehörigen obenstehenden Ausführungsformen** wird das H-Ionentauscher-Harz mit verdünnten Mineralsäuren regeneriert, so dass eine verdünnte Metallsalzlösung entsteht.

In einer bevorzugten Ausführungsform der **Aspekte A3 und A4, sowie den dazugehörigen obenstehenden Ausführungsformen** werden als Mineralsäure verdünnte Salzsäure, Schwefelsäure oder Salpetersäure verwendet.

In einer bevorzugten Ausführungsform der **Aspekte A3 und A4, sowie den dazugehörigen obenstehenden Ausführungsformen** wird die verdünnte Metallsalzlösung mit Hilfe der Diffusionsdialyse in ein saures Metallsalzkonzentrat und in eine metallfreie Mineralsäure getrennt.

In einer besonders bevorzugten Ausführungsform der **Aspekte A3 und A4, sowie den dazugehörigen obenstehenden Ausführungsformen** enthält das saure Metallsalzkonzentrat mindestens ein Metallnitrat.

In einer weiteren besonders bevorzugten Ausführungsform der **Aspekte A3 und A4, sowie den dazugehörigen obenstehenden Ausführungsformen** enthält das saure Metallsalzkonzentrat mindestens ein Metallnitrat, ausgewählt aus der Gruppe bestehend aus Aluminiumnitrat und Eisennitrat.

In einer weiteren besonders bevorzugten Ausführungsform der **Aspekte A3 und A4, sowie den dazugehörigen obenstehenden Ausführungsformen** enthält das saure Metallsalzkonzentrat mindestens Aluminiumnitrat und Eisennitrat.

In einer weiteren besonders bevorzugten Ausführungsform der **Aspekte A3 und A4, sowie den dazugehörigen obenstehenden Ausführungsformen** wird das saure Metallsalzkonzentrat, wie oben definiert, zur Fällung/Präzipitation von in einer Flüssigkeit gelösten Phosphaten als Metallphosphate verwendet.

In einer weiteren besonders bevorzugten Ausführungsform der **Aspekte A3 und A4, sowie den dazugehörigen obenstehenden Ausführungsformen** wird das saure Metallsalzkonzentrat, wie oben definiert, zur Fällung/Präzipitation von im Abwasser gelösten Phosphaten als Metallphosphate verwendet.

In einer weiteren besonders bevorzugten Ausführungsform der **Aspekte A3 und A4, sowie den dazugehörigen obenstehenden Ausführungsformen** erfolgt die Fällung der im Abwasser gelösten Phosphate mit dem sauren Metallsalzkonzentrat, wie oben definiert, innerhalb einer biologischen Denitrifikationsstufe eines Klärwerks.

Der Begriff "**Rock"** im Sinne der Erfindung bezieht sich auf jeglichen mineralischen Stoff, einem "Roh-Phosphat", der Apatit enthält.

Der Begriff **"Roh-Phosphorsäure"** im Sinne der Erfindung bezieht sich auf jegliche Flüssigkeit, die H₃PO₄ in einer Konzentration von mindestens 10%, bevorzugt mindestens 25% enthält und weiterhin Verunreinigungen, bevorzugt Verunreinigungen mit Metallen, enthält. Insbesondere bezieht sich der Begriff "Roh-Phosphorsäure" im Sinne der Erfindung auf "Merchant grade acid" bzw. MGA, auf sog.:"grüne Säure" und andere Erzeugnisse erhalten durch die Behandlung von Rock, wie oben definiert, mit Schwefelsäure.

Der Begriff "**Präzipitat"** im Sinne der Erfindung bezeichnet das Ausscheiden eines gelösten Stoffes als Feststoff aus einer Lösung, üblicherweise ausgelöst durch Zusätze von geeigneten Substanzen (Fällungsmittel). Insbesondere umfasst der Begriff jeglichen vollständig oder teilweise unlöslichen Niederschlag in Form von Flocken, oder kristallinem Material, in jeglicher mikrokristallinen, kristallinen oder amorphen Form. Der Begriff "Präzipitat" schließt ausdrücklich jegliche weitere Verarbeitung, Modifikation, Raffinierung etc., der im erfindungsgemäßen Verfahren erhaltenen Präzipitate zu Pulvern, Pudern, Stäuben, Schüttgut, granulären Materialien, Grieß etc. ein.

Der Begriff **"Kalziumhydogenphosphate"** im Sinne der Erfindung umfasst Mono-(Ca(H₂PO₄)₂ und Di-Calciumhydrogenphosphat (CaHPO₄), die beide wasserlöslicher sind als das Tri-Calciumphosphat (Ca₃(PO₄)₂) und deshalb als Düngemittel und Futtermittel (Futterphosphat) angewendet werden. In Form von Düngemittel werden sie auch als Triplesuperphosphat (TSP) bezeichnet.

Der Begriff "**Asche"** im Sinne der Erfindung bezieht sich auf jeglichen festen Rückstand aus der Verbrennung organischen Materials, beispielsweise von Klärschlamm, biologisch abbaubaren Abfällen, Bioabfällen und/oder Tierabfällen, Schlachtabfällen, z.B. Tiermehl. Asche besteht vor allem aus Oxiden und Silikaten diverser Metalle, z. B. Al₂O₃, Fe₂O₃, MgO, MnO, P₂O₅, P₄O₁₀, K₂O, SiO₂, Na₂SiO₃, CaSiO₃, etc.

Der Begriff **"phosphathaltige Asche"** im Sinne der Erfindung bezieht sich auf Aschen, wie hierein definiert, die mindestens ein Phosphat, wie hierin definiert, enthalten.

Der Begriff **"Phosphate"** im Sinne der Erfindung bezieht sich zum einen auf P₂O₅ und P₄O₁₀. Weiterhin betrifft der Begriff "Phosphate" die Salze und Ester der Orthophosphorsäure (H₃PO₄), und schließt ausdrücklich auch die Kondensate (Polymere) der Orthophosphorsäure und ihre Ester ein. Insbesondere betrifft der Begriff "Phosphate" metallische Salze der Phosphorsäure mit der allgemeinen Formel X(Y)m(PO₄)n, wobei X und wahlweise Y, ein Metall ist, ausgewählt aus der Gruppe bestehend aus Aluminium, Beryllium, Bismut, Blei, Kadmium, Chrom, Eisen, Gallium, Indium, Kalium, Kobalt, Kupfer, Magnesium, Mangan, Molybdän, Natrium, Nickel, Osmium, Palladium, Rhodium, Ruthenium, Strontium, Titan, Vanadium, Wolfram, Zink, Zinn.

Der Begriff **"Abfall-Verbrennungsanlagen"** im Sinne der Erfindung bezieht sich auf sämtliche Anlagen, Einrichtungen und dergleichen, die zur Verbrennung der atmosphärisch brennbaren Anteile von jeglicher Art von Abfall geeignet sind.

Der Begriff **"Klärschlamm"** im Sinne der Erfindung bezieht sich auf jede Suspension fein verteilter Teilchen einer festen Substanz in einer Flüssigkeit, bevorzugt eine Füssigkeit, die aus einer Abwasserreinigungsanlage (Kläranlage) stammt.

In einer bevorzugten Ausführungsform ist die Flüssigkeit, in der die Teilchen suspendiert sind, ein Abwasser wie hierin definiert.

Der Begriff "**Abwasser**" im Sinne der Erfindung bezieht sich auf sämtliche Flüssigkeiten wässriger Natur, und/oder organischer Natur, oder Mischungen daraus, die nicht Trinkwasserqualität im Sinne der Trinkwasserverordnung (TrinkwV) und/oder von nationalen und/oder internationalen Trinkwassernormen (z.B. der DIN 2000 in Deutschland) haben. Der Begriff Abwasser umfasst weiterhin alle Abwässer gemäß § 54 Abs. 1 Wasserhaushaltsgesetz (WHG).

In einer bevorzugten Ausführungsform handelt es sich bei dem Abwasser im Sinne der Erfindung um durch Gebrauch verunreinigtes bzw. in seinen Eigenschaften oder seiner Zusammensetzung verändertes Wasser. Weiterhin umfasst der Begriff "Abwasser" im Sinne der Erfindung das durch häuslichen, gewerblichen, landwirtschaftlichen oder sonstigen Gebrauch in seinen Eigenschaften veränderte Wasser und das bei Trockenwetter damit zusammen abfließende Wasser (Schmutzwasser) sowie das von Niederschlägen aus dem Bereich von bebauten oder befestigten Flächen gesammelt abfließende Wasser (Niederschlagswasser).

Die aus Anlagen zum Behandeln, Lagern und Ablagern von Abfällen austretenden und gesammelten Flüssigkeiten gelten ebenfalls als Schmutzwasser. Schmutzwässer sind häusliche Abwasser aus Toiletten (Fäkal- oder Schwarzwasser), Sanitäreinrichtungen, Küchen und Waschmaschinen (Wasch- oder Grauwasser) sowie Abwasser aus Betrieben, die in die öffentliche Kanalisation ableiten (gewerbliches oder industrielles Abwasser). Auch aufgeheiztes Wasser aus Kühlanlagen zählt als Abwasser. Abwässer, die bei den verschiedensten Reinigungs- und Behandlungstechniken von Wasseraufbereitungsanlagen anfallen, gehören zu den Abwässern im Sinne der Erfindung.

In einer besonders bevorzugten Ausführungsform liegt der Klärschlamm als Primärschlamm, Rohschlamm, Überschussschlamm, als behandelter und/oder stabilisierter Klärschlamm (aerob/anaerob) vor.

Der Begriff **"Bioabfall"** im Sinne der Erfindung bezieht sich auf sämtliche organischen Abfälle tierischer oder pflanzlicher Herkunft, die in einem Haushalt oder Betrieb anfallen und durch Mikroorganismen, bodenlebende Lebewesen oder Enzyme abgebaut werden können. Dazu zählen zum Beispiel Essenreste und Rasenschnitt. Bioabfälle werden in der Regel über die sogenannte Biotonne separat erfasst und gesondert durch Kompostierung und Gärung behandelt. Der dabei entstehende Kompost und das Gärgut werden der Umwelt häufig wieder zugeführt, unter anderem im Gartenbau und in der Landwirtschaft. Der Begriff Bioabfall umfasst dabei sowohl Abfälle gemäß der Begriffsbestimmung der EU-Abfallrahmenrichtlinie Garten- und Parkabfälle sowie Nahrungs- und Küchenabfälle (aus Haushalten, Gaststätten, Cateringgewerbe, Einzelhandel und Verarbeitungen im Nahrungsmittelgewerbe).

Der Begriff **"biologisch abbaubare Abfälle"** im Sinne der Erfindung umfasst neben Bioabfällen wie hierin definiert, weiterhin auch sämtliche organischen Abfälle tierischer oder pflanzlicher Herkunft aus Land- und Forstwirtschaft, die durch Mikroorganismen, bodenlebende Lebewesen oder Enzyme abgebaut werden können. Insbesondere umfasst dieser Begriff sämtliche organischen Abfälle tierischer oder pflanzlicher Herkunft aus Land- und Forstwirtschaft die weiterhin mindestens einen der folgenden biologisch abbaubare Stoffe ausgewählt aus der Liste bestehend aus Holz, Papier und Pappe enthalten.

Der Begriff "**Tierabfälle**" im Sinne der Erfindung umfasst Tierkörper verendeter, toter oder totgeborener Groß- oder Haustiere - oder Teile davon - sowie Schlachtabfälle, verdorbene Lebensmittel tierischer Herkunft, und Tiernebenprodukte wie Milch, Eier, Konfiskate aber auch Darminhalt und Gülle, sowie sämtliche weiteren Produkte, Erzeugnisse.

Insbesondere umfasst der Begriff "Tierabfälle" im Sinne der Erfindung Fleisch und tierische Nebenprodukte von Haustieren, Wildtieren oder Nutztieren, die aus Krankheitsgründen getötet wurden oder verendeten, insbesondere TSE verseuchte Tierleichen sowie mit Chemikalien oder verbotenen Stoffen kontaminierte Tiere und Versuchstiere. Weiterhin umfasst sind Fleisch und Nebenprodukte mit dem Risiko anderer, nicht übertragbarer Krankheiten.

Der Begriff "Tierabfälle" im Sinne der Erfindung umfasst außerdem getötete, also nicht geschlachtete Tiere, tierische Nebenprodukte (beispielsweise Milch), und jegliche Tierprodukte mit Rückständen von Medikamenten. Ebenfalls ausdrücklich umfasst sind sämtliche Abfälle und Nebenprodukte aus Schlachtbetrieben, Küchen- und Speiseabfälle, für den menschlichen Verzehr nicht mehr geeignete Lebensmittel tierischen Ursprungs, Rohmilch, frischer Fisch oder frische Fischnebenprodukte. Insbesondere sind umfasst:
- Küchen- und Speiseabfälle jeglicher Art,
- Fische oder andere Meerestiere, sowie Fischabfälle jeglicher Art,
- Ehemalige tierische Lebensmittel, die aus anderen, nicht gesundheitsschädlichen Folgen, z.B. Verpackungsmängeln, für den menschlichen Verzehr nicht mehr bestimmt sind,
- Schlachtkörperteile,
- Rohmilch,
- Schalen, Brütereinebenprodukte und Knickeiernebenprodukte,
- Haare, Pelze, Hörner usw.,
- Tierische Abfälle aus der Lebensmittelindustrie,
- Häute, Hufe und Hörner, Schweineborsten und Federn von Tieren,
- überlagertes Fleisch,
- minderwertiges Fleisch,
- Fleisch von Tieren unter erheblicher Stressbelastung,
- Blut von Tieren (nicht von Wiederkäuern), die nach einer Untersuchung in einem Schlachthof geschlachtet wurden,
- Tierische Schlachtkörperteile und Nebenprodukte, die bei der Herstellung von für den menschlichen Verzehr bestimmten Erzeugnissen angefallen sind, entfettete Knochen und Grieben, sowie Tiermehl.

In bevorzugten Ausführungsformen der **Aspekte A1 bis A4, sowie den dazugehörigen obenstehenden Ausführungsformen,** erfolgt die Verbrennung von Klärschlamm, biologisch abbaubaren Abfällen, Bioabfällen und/oder Tierabfälle in einer Abfall-Verbrennungsanlagen bei 600° bis 1.200 °C erfolgt, vorzugsweise bei 800° bis 900°C.

### BEISPIELE

Der gesamte Prozess wird durch den folgenden Versuchsablauf beschrieben: Ausgangsmaterial ist einerseits eine ca. 70%ige Roh-Phosphorsäure (MGA-Säure) aus Nordafrika mit folgenden relevanten Schwermetallverunreinigungen:

| | | |
|---|---|---|
| Arsen | As | 5 |
| Cadmium | Cd | 24 |
| Chrom | Cr | 120 |
| Kupfer | Cu | 46 |
| Nickel | Ni | 24 |
| Uran | U | 210 |

### (Angaben jeweils mg/kg Säure)

Ausgangsmaterial ist andererseits eine Asche aus einer Co-Verbrennungsanlage, in der Klärschlamm mit tierischen Abfällen verbrannt worden ist. Die wesentlichen Bestandteile wurden wie folgt analysiert:

| | |
|---|---|
| Gew. % P₂O₅ | 27,0 (entspricht 11,7% P bzw. 37% H₃PO₄) |
| Gew. % CaO | 19,6 |
| Gew. % Fe₂O₃ | 16,3 |
| Gew. % Al₂O₃ | 5,9 |
| Gew. % SiO₂ | 25,5 |

100g Asche werden in einem Becherglas mit 300g verdünnter H₃PO₄ behandelt. Die verdünnte Säure besteht aus 60 Gew. % Wasser und 40 Gew. % MAG-Säure aus Nordafrika. Die Suspension wird 20 Minuten bei 45°C gerührt. Anschließend werden 8g Kalkmilch (20%ige CaO-Suspension) und 10g Bariumsulfid-Lösung (20%ig BaS - Lösung) zugegeben und die Suspension nach weiteren 10 Minuten Reaktionszeit über eine Vakuum-Nutsche (mit Filter) filtriert und mit 75g Wasser gewaschen.

Insgesamt wurden 350g Filtrat bzw. Eluat zurückgewogen und wie folgt analysiert:

| | |
|---|---|
| H₃PO₄ | 33,7 Gew.% |
| CaO | 3,6 " |
| Fe₂O₃ | 0,6 " |
| Al₂O₃ | 0,8 " |

| | | |
|---|---|---|
| Arsen | As | <1 g/kg |
| Cadmium | Cd | <1 " |
| Chrom | Cr | 19 " |
| Kupfer | Cu | <1 " |
| Nickel | Ni | 5 " |
| Uran | U | 40 " |

Das so gewonnene Eluat "RePacid" ist etwa halb so konzentriert wie die eingesetzte MGA-Säure. In 350g Eluat befinden sich 84g H₃PO₄ aus der MGA-Säure und 34g aus der Asche, insgesamt 118g H₃PO₄ = 33,7 Gew. %. Ohne den Phosphat-Anteil aus der Asche wäre die H₃PO₄-Konzentration nur 24 Gew. %. Die analysierten Schwermetall-Konzentrationen sind teils deutlich niedriger, als sie einer 35%igen MGA-Säure entsprechen würden, wie die folgende Gegenüberstellung zeigt:

| | | MGA/70% | MGA/35% | Eluat/33,7% |
|---|---|---|---|---|
| Arsen | As | 5 | 2,5 | <1 |
| Cadmium | Cd | 24 | 12 | <1 |
| Chrom | Cr | 120 | 60 | 19 |
| Kupfer | Cu | 46 | 23 | <1 |
| Nickel | Ni | 24 | 12 | 5 |
| Uran | U | 210 | 105 | 40 |

### (Angaben jeweils mg/kg Säure)

Das so gewonnene Eluat wurde **entsprechend der Alternative 1** der Erfindung, durch Zugabe von Branntkalk (CaO) und Trikalziumphosphat (aus Tiermehlasche) gemäß der bekannten Reaktionen in Kalziumhydrogenphosphat umgewandelt, das in Düngemitteln als Triplesuperphosphat enthalten ist:

6H₃PO₄ + 3CaO = 3Ca(H₂PO₄)₂ + 3H₂O

4H₃PO₄ + Ca₃(PO₄)₂ = 3Ca(H₂PO₄)₂

Entsprechend der Stöchiometrie werden für
6 x 98 = **588**g Phosphorsäure 3 x 56g = **168**g Kalziumoxid
bzw. für 4 x 98 = **392**g Phosphorsäure **310**g Trikalziumphosphat benötigt.

Im Beispiel werden für 350g Eluat mit 118g H₃PO₄ somit 33,7g CaO bzw. 93,3g Ca₃(PO₄)₂ benötigt. Für den Versuch wurde in einem Mixer folgende Mischung zur Reaktion gebracht:
350g RePacid-Eluat plus
55g Tiermehlasche
25g CaO

Es bildete sich infolge der exothermen Reaktion (Löschen von Branntkalk und Neutralisationswärme) ein heißes Granulat, das an der Luft getrocknet und danach wie folgt analysiert wurde:

### RePacid-Granulat

| | |
|---|---|
| P₂O₅ | 48,6 Gew.% |
| CaO | 23,8 " |

| | | |
|---|---|---|
| Arsen | As | <1 g/kg |
| Cadmium | Cd | <1 " |
| Chrom | Cr | 35 " |
| Kupfer | Cu | 6 " |
| Nickel | Ni | 10 " |
| Uran | U | 38 " |

Wegen der geringen Schwermetallbelastung ist das so gewonnene Kalziumhydrogenphosphat ideal als Triplesuperphosphat / Düngemittel geeignet.

Entsprechend der **Alternative 2** wurde das RePacid-Eluat durch Zugabe von Schwefelsäure von gelöstem Kalzium befreit und anschließend mit Ionentauscher-Harzen gereinigt, so dass die gereinigte Rohsäure teilweise als Aufschluss-Säure eingesetzt, teilweise durch Vakuumverdampfung auf ca. 70% H₃PO₄ konzentriert werden konnte.

500g Eluat der 1. Stufe mit einem Ca-Gehalt von 3,6% CaO ( = 18g CaO) wird in einem Rührgefäß mit der stöchiometrisch erforderlichen Menge Schwefelsäure versetzt. Die Schwefelsäuremenge errechnet sich aus der Gleichung:

Ca²⁺ + H₂SO₄ = CaSO₄ + 2H⁺

Für 40g Ca bzw. 56g CaO werden 98g H₂SO₄ benötigt. Für 18g CaO in 500g Eluat werden 31,5g H₂SO₄ benötig. Für das Beispiel wurde 63g 50%ige Schwefelsäure zugegeben und das entstehende Kalziumsulfat-Präzipitat (Gips) nach einer Reaktionszeit von 30 Minuten über eine Nutsche mit Vakuum filtriert und entwässert. Dabei wurde 500g Filtrat (RePecid-Rohsäure) und 70g Gips-Filterkuchen gewonnen. Anschließend wurde die Rohsäure tropfenweise über einen sauren H-Ionentauscher (Polystyrolharz-Kügelchen) gegeben, wobei ein großer Teil der in Phosphorsäure gelösten Metallionen, vor allem Eisen- und Aluminium-Ionen gegen H-Ionen ausgetauscht wurden. Die RePacid-Roh- und Reinsäure wurde wie folgt analysiert:

| | H₃PO₄ % | Ca g/kg | Mg g/kg | Al g/kg | Fe g/kg |
|---|---|---|---|---|---|
| Eluat (vor H₂SO₄-Zugabe) | 33,7% | 36,2 | 3,2 | 4,0 | 4,4 |
| Rohsäure (nach H₂SO₄) | 30,9% | 1,1 | 2,8 | 3,8 | 4,0 |
| Reinsäure (nach H-Tausch) | 31,2% | <0,1 | 0,2 | 0,7 | 0,9 |

Die so gewonnene Reinsäure wurde einerseits teilweise als Aufschluss-Säure zum Lösen von Asche verwendet, andererseits in einem Vakuumverdampfer bei 70°C auf eine Konzentration von 70% H₃PO₄ eingeengt und kann als gereinigte MGA-Säure RePacid vermarktet werden. Die mit Metall-lonen beladenen Harz-Kügelchen wurden nach dem allgemeinen Stand der Technik einerseits mit verdünnter Salzsäure, alternativ mit verdünnter Salpetersäure regeneriert, wobei sich die Säuren im Austausch von H-Ionen (Ionentauscher) mit Metallionen anreicherten. Sofern der gesamte hier beschriebene Prozess als zusätzlicher Schritt zur Rückgewinnung von Phosphor aus Klärschlammaschen auf einer Klärschlammverbrennungsanlage stattfindet, kann die metallbeladene Regenerationssäure als Fällungsmittel für die im Abwasser gelösten Phosphate verwendet werden.

## Patentansprüche

1. Verfahren zur Reinigung von Roh-Phosphorsäure, **dadurch gekennzeichnet, dass**
a) Roh-Phosphorsäure mit Asche, Kalziumhydroxid und mindestens einem Sulfid reagiert wird,
b) der in der Roh-Phosphorsäure unlösliche Teil der Feststoffe abgeschieden wird, so dass ein Filtrat erhalten wird,
**dadurch gekennzeichnet, dass** die Asche durch Verbrennung von phosphathaltigen Klärschlämmen, biologisch abbaubaren Abfällen, Bioabfällen und/oder Tierabfällen in einer Abfall-Verbrennungsanlage erhalten wird.

2. Verfahren nach Anspruch 1, das Verfahren weiterhin umfassend die Gewinnung von reiner Phosphorsäure, Metallsalzen, Kalziumhydrogenphosphaten, und Kalziumsulfat, das Verfahren mindestens umfassend die Gewinnung von Kalziumhydrogenphosphat **dadurch gekennzeichnet, dass**
c) optional durch Zugabe von Schwefelsäure zum Filtrat ein pH Wert <1 eingestellt wird, und Kalziumsulfat-Präzipitat gewonnen und abgeschieden wird,
d) optional das Filtrat zumindest teilweise, zurückgeführt wird zur Verwendung in Schritt a),
e) durch Zugabe eines Tricalciumphosphathaltigen Feststoffes und/oder durch Zugabe von Kalziumoxid und/oder Kalziumcarbonat zum Filtrat aus Schritt b) oder c), Kalziumhydrogenphosphat-Präzipitat gewonnen wird.

3. Verfahren nach Anspruch 1, das Verfahren weiterhin umfassend die Gewinnung von reiner Phosphorsäure, Metallsalz-Lösung, Kalziumhydrogenphosphaten, z.B. Triplesuperphosphat und Kalziumsulfat, das Verfahren mindestens umfassend die Gewinnung von reiner Phosphorsäure, **dadurch gekennzeichnet, dass**
c) durch Zugabe von Schwefelsäure zum Filtrat ein pH Wert <1 eingestellt wird, und Kalziumsulfat-Präzipitat gewonnen und abgeschieden wird,
d) optional das Filtrat zumindest teilweise, zurückgeführt wird zur Verwendung in Schritt a),
e) die im Filtrat aus Schritt b) oder c) gelösten Metall-Ionen durch H-lonentauscher-Harze oder durch Diffusionsdialyse entfernt werden, und das Eluat konzentriert wird, bevorzugt durch Vakuumverdampfung, zur Gewinnung von reiner Phosphorsäure,
f) optional nach Schritt e) das lonentauscher-Harz regeneriert wird, und Metallsalz-Lösung gewonnen wird.

4. Verfahren nach Anspruch 3, das Verfahren umfassend die Gewinnung von reiner Phosphorsäure, Metallsalz-Lösung, Kalziumhydrogenphosphaten und Kalziumsulfat, das Verfahren mindestens umfassend die Gewinnung von Kalziumsulfat, reiner Phosphorsäure, Metallsalz-Lösung und/oder von Kalziumhydrogenphosphat, **dadurch gekennzeichnet, dass**
f) nach Schritt e) das lonentauscher-Harz regeneriert wird, und Metallsalz-Lösung gewonnen wird, und/oder
g) durch Zugabe von Tricalciumphosphathaltigen Feststoffen und/oder durch Zugabe von Kalziumoxid und/oder Kalziumcarbonat zum Filtrat aus Schritt b) oder c), Kalziumhydrogenphosphat-Präzipitat gewonnen wird.

5. Verfahren nach einem der Ansprüche 1 bis 4, **dadurch gekennzeichnet, dass** die Asche in einem Reaktor mit der Roh-Phosphorsäure gemäß Anspruch 1 versetzt wird, wobei die Roh-Phosphorsäure in einer Konzentration von 10% bis 50 Gew.% H₃PO₄, vorzugsweise 10% bis 30 Gew.% H₃PO₄ vorliegt, und wobei der Anteil an Asche 5 % bis 50 Gew.%, vorzugsweise 20% bis 30 Gew.%, bezogen auf die verdünnte Roh-Phosphorsäure, beträgt.

6. Verfahren nach einem der Ansprüche 1 bis 5, **dadurch gekennzeichnet, dass** die Roh-Phosphorsäure MGA "Merchant grade acid" ist.

7. Verfahren nach einem der Ansprüche 1 bis 6, **dadurch gekennzeichnet, dass** der Asche-Roh-Phosphorsäure-Suspension gemäß Schritt a) in Anspruch 1 nach 1 bis 300 Minuten, vorzugsweise nach 10 bis 30 Minuten, Kalziumhydroxid und das mindestens eine Sulfid zugegeben wird, wobei das mindestens eine Sulfid ausgewählt ist aus Sulfiden bzw. Polysulfiden von Alkalien oder Erdalkalien, oder Mischungen davon, wobei mindestens eine Sulfid in einer Konzentration von 0,1g bis 10g Sulfid-Schwefel pro 100g Asche zugegeben wird.

8. Verfahren nach einem der Ansprüche 1 bis 7, **dadurch gekennzeichnet, dass** der Asche-Säure-Suspension das Kalziumhydroxid bis zu einem pH-Wert von 1,5 bis 3,0, vorzugsweise von 1,5 bis 2,0 zugegeben wird.

9. Verfahren nach Anspruch 2, **dadurch gekennzeichnet, dass** in Schritt e) ein Tricalciumphosphathaltiger Feststoff zugegeben wird und dass es sich bei dem Trikalziumphosphathaltigen Feststoff um Asche, erhalten durch Verbrennung von biologisch abbaubaren Abfällen, phosphathaltigen Klärschlämmen, Bioabfällen und/oder Tierabfällen in einer Abfall-Verbrennungsanlage, handelt.

## Claims

1. Method for purifying raw phosphoric acid, **characterized in that**
a) raw phosphoric acid is reacted with ash, calcium hydroxide and at least one sulfide,
b) the acid-insoluble portion of the solids is separated, so that a filtrate is obtained,
**characterized in that** the ash is obtained by incinerating phosphate-containing sewage sludges, biodegradable wastes, bio-wastes and/or animal wastes in a waste incineration plant.

2. Method according to claim 1, the method further comprising obtaining pure phosphoric acid, metal salts, calcium hydrogen phosphates, and calcium sulfate (CaSO₄), the method at least comprising obtaining of calcium hydrogen phosphate, **characterized in that**
c) optionally, a pH value of <1 is adjusted and calcium sulfate precipitate is obtained and separated by adding sulfuric acid to the filtrate,
d) optionally, the filtrate is at least partially recycled for the use in step a),
e) calcium hydrogen phosphate precipitate is obtained by adding tricalcium phosphate-containing solids and/or by adding calcium oxide and/or calcium carbonate to the filtrate from step b) or c).

3. Method according to claim 1, the method further comprising obtaining pure phosphoric acid, metal salt solution, calcium hydrogen phosphates, e.g. triple superphosphate and calcium sulfate, the method at least comprising obtaining pure phosphoric acid, **characterized in that**
c) a pH value of <1 is adjusted and calcium sulfate precipitate is obtained and separated by adding sulfuric acid to the filtrate,
d) optionally, the filtrate is at least partially recycled for the use in step a),
e) the metal ions dissolved in the filtrate from step b) or c) are removed by H-ion exchange resins or by diffusion dialysis and the eluate is concentrated, preferably by vacuum evaporation, for obtaining pure phosphoric acid,
f) optionally, the ion exchange resin is regenerated and the metal salt solution is obtained after step e).

4. Method according to claim 3, the method comprising obtaining pure phosphoric acid, metal salt solution, calcium hydrogen phosphates and calcium sulfate, the method at least comprising obtaining of calcium sulfate, pure phosphoric acid, metal salt solution and/or calcium hydrogen phosphate, **characterized in that**
f) the ion exchange resin is regenerated and the metal salt solution is obtained after step e), and/or
g) calcium hydrogen phosphate precipitate is obtained by adding tricalcium phosphate-containing solids and/or by adding calcium oxide and/or calcium carbonate to the filtrate from step b) or c).

5. Method according to any one of claims 1 to 4, **characterized in that** the ash is added to raw phosphoric acid according to claim 1 in a reactor, wherein the raw phosphoric acid has a concentration of 10 wt% to 50 wt% H₃PO₄, preferably 10 wt% to 30 wt% H₃PO₄, and wherein the portion of ash is 5 wt% to 50 wt%, preferably 20 wt% to 30 wt%, based on the diluted raw phosphoric acid.

6. Method according to any one of claims 1 to 5, **characterized in that** the raw phosphoric acid is MGA "Merchant grade acid".

7. Method according to any one of claims 1 to 6, **characterized in that** the calcium hydroxide and the at least one sulfide are added to the ash-raw phosphoric acid suspension according to step a) in claim 1 after 1 to 300 minutes, preferably after 10 to 30 minutes, wherein the at least one sulfide is selected from sulfides or polysulfides of alkalis or alkaline earths, or mixtures thereof, wherein at least one sulfide is added in a concentration of 0.1g to 10g sulfide sulfur per 100g ash.

8. Method according to any one of claims 1 to 7, **characterized in that** the calcium hydroxide is added to the ash-acid suspension up to a pH value of 1.5 to 3.0, preferably 1.5 to 2.0.

9. Method according to claim 2, **characterized in that** in step e) a tricalcium phosphate-containing solid is added and the tricalcium phosphate-containing solid is an ash, obtained by incinerating biodegradable wastes, sewage sludges, bio-wastes and/or animal wastes in a waste incineration plant.

## Revendications

1. Procédé de purification d'acide phosphorique brut, **caractérisé en ce que**
a) on fait réagir de l'acide phosphorique brut avec de la cendre, de l'hydroxyde de calcium et au moins un sulfure,
b) on sépare la part insoluble des matières solides dans l'acide phosphorique brut de manière à obtenir un filtrat,
**caractérisé en ce que** la cendre est obtenue par incinération de boues de clarification contenant du phosphate, de déchets biodégradables, de biodéchets et/ou de déchets animaux dans une installation d'incinération de déchets.

2. Procédé selon la revendication 1, ledit procédé comprenant en outre l'obtention d'acide phosphorique pur, de sels métalliques, d'hydrogénophosphates de calcium et de sulfate de calcium, ledit procédé comprenant au moins l'obtention d'hydrogénophosphate de calcium, **caractérisé en ce que**
c) facultativement, on ajuste une valeur de pH < 1 par addition d'acide sulfurique au filtrat, et on obtient et on sépare un précipité de sulfate de calcium,
d) facultativement, on recycle le filtrat au moins partiellement pour une utilisation à l'étape a),
e) on obtient un précipité d'hydrogénophosphate de calcium par addition d'une matière solide contenant du phosphate tricalcique et/ou par addition d'oxyde de calcium et/ou de carbonate de calcium au filtrat issu de l'étape b) ou c).

3. Procédé selon la revendication 1, ledit procédé comprenant en outre l'obtention d'acide phosphorique pur, de solution de sel métallique, d'hydrogénophosphates de calcium, par exemple de superphosphate triple et de sulfate de calcium, ledit procédé comprenant au moins l'obtention d'acide phosphorique pur, **caractérisé en ce que**
c) on ajuste une valeur de pH < 1 par addition d'acide sulfurique au filtrat, et on obtient et on sépare un précipité de sulfate de calcium,
d) facultativement, on recycle le filtrat au moins partiellement pour une utilisation à l'étape a),
e) on élimine les ions métalliques dissous dans le filtrat issu de l'étape b) ou c) grâce à des résines échangeuses d'ions H ou par dialyse par diffusion et on concentre l'éluat, de préférence par évaporation sous vide, pour l'obtention d'acide phosphorique pur,
f) facultativement, après l'étape e), on régénère la résine échangeuse d'ions, et on obtient une solution de sel métallique.

4. Procédé selon la revendication 3, ledit procédé comprenant l'obtention d'acide phosphorique pur, de solution de sel métallique, d'hydrogénophosphates de calcium et de sulfate de calcium, ledit procédé comprenant au moins l'obtention de sulfate de calcium, d'acide phosphorique pur, de solution de sel métallique et/ou d'hydrogénophosphate de calcium, **caractérisé en ce que**
f) après l'étape e), on régénère la résine échangeuse d'ions, et on obtient une solution de sel métallique, et/ou
g) on obtient un précipité d'hydrogénophosphate de calcium par addition de matières solides contenant du phosphate tricalcique, et/ou par addition d'oxyde de calcium et/ou carbonate de calcium au filtrat issu de l'étape b) ou c).

5. Procédé selon l'une des revendications 1 à 4, **caractérisé en ce que** la cendre est mélangée dans un réacteur avec de l'acide phosphorique brut selon la revendication 1, l'acide phosphorique brut étant présent en une concentration de 10 % à 50 % en poids de H₃PO₄, de préférence de 10 % à 30 % en poids de H₃PO₄, et la proportion de cendre étant de 5 % à 50 % en poids, de préférence de 20 % à 30 % en poids, par rapport à l'acide phosphorique brut dilué.

6. Procédé selon l'une des revendications 1 à 5, **caractérisé en ce que** l'acide phosphorique brut est le MGA (« Merchant grade acid »).

7. Procédé selon l'une des revendications 1 à 6, **caractérisé en ce que** l'on ajoute à la suspension de cendre et d'acide phosphorique brut selon l'étape a) de la revendication 1 au bout de 1 à 300 minutes, de préférence au bout de 10 à 30 minutes de l'hydroxyde de calcium et le au moins un sulfure, ledit au moins un sulfure étant choisi parmi les sulfures et/ou les polysulfures d'alcalis ou d'alcalino-terreux, ou de mélanges de ceux-ci, ledit au moins un sulfure étant ajouté en une concentration de 0,1 g à 10 g de sulfure-soufre pour 100 g de cendres.

8. Procédé selon l'une des revendications 1 à 7, **caractérisé en ce que** l'on ajoute de l'hydroxyde de calcium à la suspension de cendre-acide jusqu'à un pH de 1,5 à 3,0, de préférence de 1,5 à 2,0.

9. Procédé selon la revendication 2, **caractérisé en ce que** l'on ajoute, à l'étape e) une matière solide contenant du phosphate tricalcique et **en ce que** la matière solide contenant du phosphate tricalcique est de la cendre, obtenue par incinération de déchets biodégradables, de boues de clarification contenant du phosphate, de biodéchets et/ou de déchets animaux dans une installation d'incinération de déchets.
